# DEMANDE DE BREVET EUROPEEN

(11) **EP 4 759 211 A1**
(43) Date de publication de la demande: **17.06.2026**
(21) Numéro de dépôt: 25221042.2
(22) Date de dépôt: 05.12.2025
(51) Int. Cl.: A47J 43/07, A47J 43/044

(54) **PIED DE MIXAGE A CAPTEUR INTÉGRÉ ET MIXEUR PLONGEANT COMPRENANT UN TEL PIED DE MIXAGE**

(30) Priorité: 09.12.2024 FR 2413706
(71) Demandeur: Société d'Etudes et de Réalisation Mécaniques, 85290 Mortagne-sur-Sèvre (FR)
(72) Inventeur: BOULANGER, Julien, 85290 MORTAGNE-SUR-SEVRE (FR)
(74) Mandataire: Cabinet Boettcher

(57) **Abrégé**

Pied de mixage (20) pour mixeur plongeant (1) destiné à être immergé dans une préparation alimentaire, comprenant :
- un fût (21) tubulaire ayant une extrémité délimitant une cloche (21a) ;
- un élément d'obturation (24) de l'extrémité du fût, délimitant un fond de la cloche ;
- un arbre de transmission (22) qui s'étend selon un axe longitudinal du fût et qui est monté à rotation suivant ledit axe longitudinal dans un premier perçage central ménagé dans l'élément d'obturation ; et
- un couteau (23) reçu à l'intérieur de la cloche et fixé à une extrémité de l'arbre de transmission,
caractérisé en ce que le pied de mixage comprend en outre au moins un capteur (28, 28') de mesure d'un paramètre de la préparation alimentaire, le capteur s'étendant à l'intérieur de la cloche pour délivrer un signal représentatif du paramètre de ladite préparation alimentaire.

## Description

La présente invention concerne le domaine du matériel de cuisine, en particulier celui des appareils électroportatifs de type mixers plongeants destinés à la réalisation de préparations alimentaires.

De tels appareils sont bien connus et couramment utilisés pour mélanger, hacher, mixer, ou émulsionner des ingrédients dans un récipient. Ils comprennent classiquement un bloc-moteur sur lequel est rapporté un pied de mixage se terminant par une cloche. Le bloc-moteur est apte à être saisi dans une main par l'utilisateur et comporte un moteur électrique entraînant en rotation un couteau logé dans la cloche. Le bloc-moteur comporte en outre des dispositifs de commande du moteur tels qu'un bouton « marche-arrêt », ainsi que pour la plupart des appareils un variateur de vitesse de rotation du moteur. En fonctionnement, l'utilisateur saisit le bloc-moteur d'une main et plonge le pied de mixage à l'intérieur du récipient contenant la préparation pour mettre en contact le couteau avec les ingrédients. Le couteau, entraîné en rotation à grande vitesse par le moteur, mélange, hache, mixe ou émulsionne les ingrédients, l'autre main maintenant généralement le récipient dans lequel se trouvent les aliments.

Certaines préparations, notamment en pâtisserie et en chocolaterie, exigent de contrôler précisément la température de la préparation au cours du mixage ou de l'émulsion, par exemple lors de la préparation d'une ganache. Pour ce faire, l'utilisateur doit simultanément d'une main continuer à mixer la préparation en y plongeant le pied du mixage, et avec l'autre main réaliser au moyen d'un thermomètre une prise de température précise de la préparation tout en parvenant à maintenir le récipient. Ainsi, l'utilisateur doit immerger suffisamment le thermomètre au plus près du pied de mixage sans pour autant que ledit thermomètre et ledit pied de mixage n'entrent en contact, ni que le récipient ne se renverse. Le contrôle de la température est donc difficile à réaliser et nécessite une grande dextérité pour être correctement réalisé.

Qui plus est, le mixeur plongeant peut être à la fois utilisé pour mixer des ingrédients qui peuvent s'avérer durs (ingrédients insuffisamment cuits, fruits secs...) et pour mixer ou émulsionner des ingrédients pâteux ou liquides (purée, mayonnaise, ganache...), le tout à des températures variables allant de températures négatives à des températures supérieures à 100 degrés Celsius. L'utilisation d'un mixeur plongeant peut en outre s'avérer dangereux pour l'utilisateur dans la mesure où le couteau peut généralement être entraîné en rotation par le moteur sans nécessairement que le pied de mixage soit immergé dans la préparation.

### OBJET DE L'INVENTION

L'invention a donc pour but de proposer un pied de mixage et un mixeur plongeant permettant d'obvier au moins en partie aux problèmes précités

### RESUME DE L'INVENTION

A cet effet, l'invention propose un pied de mixage pour mixeur plongeant destiné à être immergé dans une préparation alimentaire. Le pied de mixage comprend :
- un fût tubulaire ayant une extrémité délimitant une cloche ;
- un élément d'obturation de l'extrémité du fût, l'élément d'obturation délimitant un fond de la cloche ;
- un arbre de transmission qui s'étend selon un axe longitudinal du fût et qui est monté à rotation suivant ledit axe longitudinal dans un premier perçage central ménagé dans l'élément d'obturation, et
- un couteau reçu à l'intérieur de la cloche et fixé à une extrémité de l'arbre de transmission.

Selon l'invention, le pied de mixage comprend en outre au moins un capteur de mesure d'un paramètre de la préparation alimentaire, le capteur s'étendant à l'intérieur de la cloche pour délivrer un signal représentatif du paramètre de ladite préparation alimentaire.

Le pied de mixage permet ainsi de mesurer et le cas échéant d'afficher sur le mixeur plongeant le paramètre mesuré à l'aide du capteur, ce qui assure ainsi à l'utilisateur une meilleure ergonomie puisqu'il peut d'une seule main à la fois mixer ou émulsionner la préparation alimentaire tout en mesurant, et le cas échéant visualisant, une valeur représentative du paramètre mesuré, son autre main restant libre pour tenir le récipient.

En outre, la position du capteur à l'intérieur de la cloche permet une mesure précise du paramètre, celle-ci se trouvant au cœur de la préparation.

Enfin, le pied de mixage reste facile à nettoyer, l'intégration du capteur à l'intérieur de la cloche permettant un nettoyage complet et facile dudit pied de mixage, limitant les risques de contamination.

Selon une caractéristique particulière, le capteur s'étend dans le fond de la cloche.

De manière particulière, le capteur s'étend dans un deuxième perçage ménagé dans l'élément d'obturation parallèlement au premier perçage qui est réservé au passage de l'arbre de transmission à travers l'élément d'obturation.

De manière particulière, le capteur comprend un élément sensible maintenu en position dans le deuxième perçage via une résine polymère.

De manière particulière, le capteur est sous forme d'une sonde insérée dans le deuxième perçage.

Selon une autre caractéristique particulière, le capteur est un capteur de température agencé pour mesurer la température de la préparation alimentaire.

Selon une autre caractéristique particulière, le capteur est un capteur de détection d'immersion du fond de la cloche dans la préparation alimentaire.

L'invention concerne aussi un mixeur plongeant comprenant un bloc-moteur sur lequel est rapporté un tel pied de mixage. Le bloc-moteur comporte un moteur électrique agencé pour entraîner en rotation l'arbre de transmission et une unité de commande du moteur, le capteur étant relié à l'unité de commande.

Selon une caractéristique particulière, le bloc-moteur comprend un écran d'affichage relié à l'unité de commande pour afficher une valeur représentative du paramètre de la préparation alimentaire via le signal délivré par le capteur.

Selon une autre caractéristique particulière, l'unité de commande est agencée pour empêcher le fonctionnement du moteur en fonction du signal délivré par le capteur. D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue d'un mixeur plongeant selon un mode de réalisation particulier de l'invention ;
[Fig. 2] la figure 2 est une vue en coupe axiale du mixeur plongeant illustré à la figure 1 ;
[Fig. 3] la figure 3 est une vue partielle, en perspective et en coupe axiale, du pied de mixage du mixeur plongeant illustré à la figure 1 ;
[Fig. 4] la figure 4 est une vue analogue à la figure 3, illustrant une variante du pied de mixage illustré à la figure 3.

### DESCRIPTION DETAILLEE DE L'INVENTION

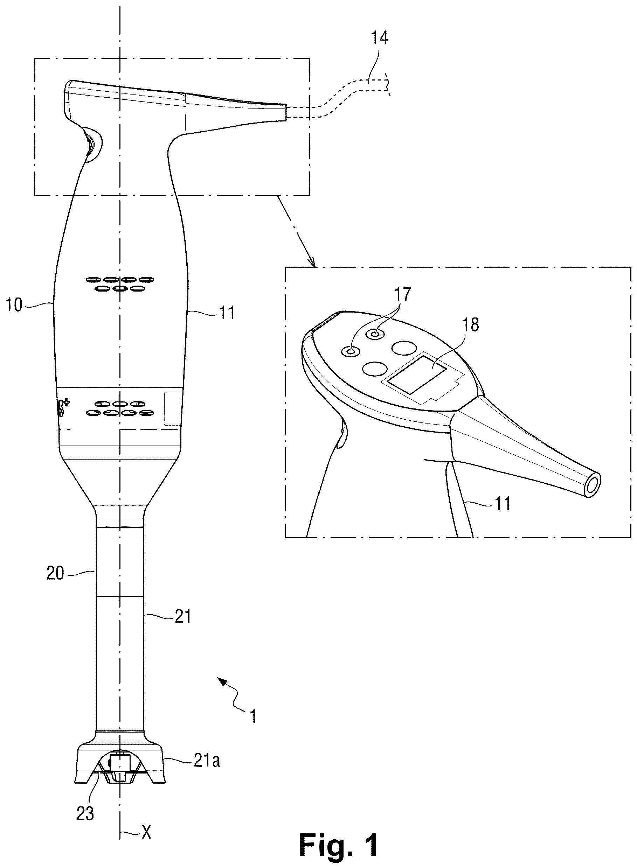

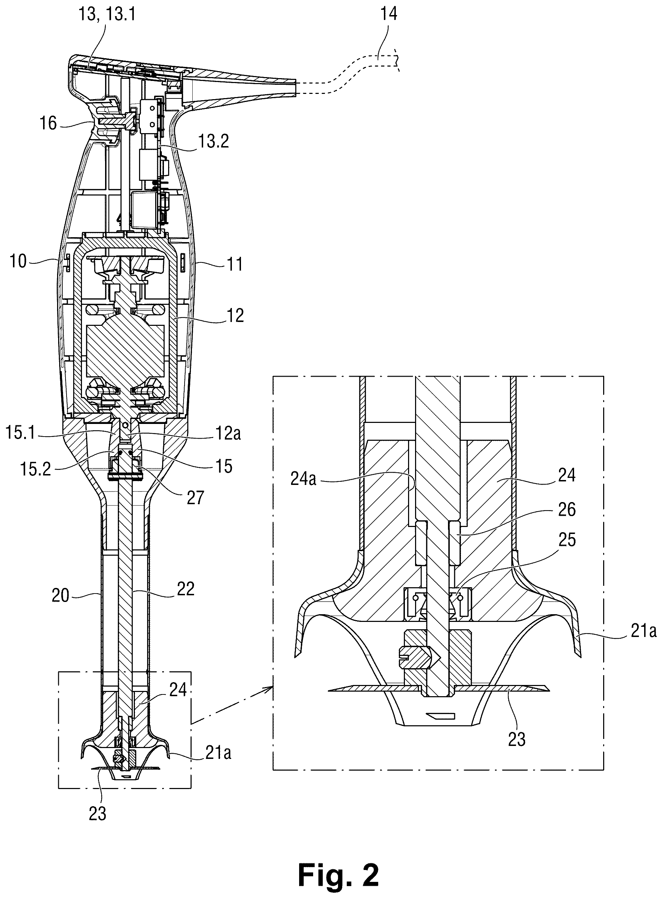

En référence aux figures 1 et 2, l'invention est décrite en application à un mixeur 1 plongeant portatif destiné à broyer des ingrédients pour la réalisation d'une préparation alimentaire. Le mixeur 1 comprend un bloc-moteur 10 sur lequel est rapporté un pied de mixage 20 définissant un axe X longitudinal du mixeur plongeant 1. En service, l'axe X est sensiblement vertical de sorte que le bloc-moteur 10 et le pied de mixage 20 forment respectivement une partie supérieure et une partie inférieure du mixeur 1 en service.

Le bloc-moteur 10 comprend, de façon connue en soi, un boîtier 11 renfermant un moteur 12 électrique et une unité de commande 13 du moteur 12, et un cordon d'alimentation 14 s'étendant à l'extérieur du boîtier 11 pour relier le moteur 12 à une source d'alimentation.

Le boîtier 11, de forme globalement cylindrique, s'étend selon l'axe X et est conformé pour être saisi d'une main par l'utilisateur et maintenu sensiblement en position verticale lors de l'utilisation du mixeur 1.

Le moteur 12 comporte un arbre de sortie 12a s'étendant selon l'axe X à travers une ouverture centrale ménagée à une extrémité inférieure du boîtier 11. L'arbre de sortie 12a est équipé d'un entraîneur rotatif 15 s'étendant à l'extérieur du boîtier 11. L'entraîneur rotatif 15 est fixe vis-à-vis de l'arbre de sortie 12a du moteur 12 et comprend un corps tubulaire ayant un premier tronçon d'extrémité 15.1 emmanché sur l'arbre de sortie 12a du moteur 12, et à l'opposé, un deuxième tronçon d'extrémité 15.2 s'étendant en saillie dudit arbre de sortie 12a et comportant intérieurement des dents d'entraînement.

L'unité de commande 13 comprend une première carte électronique 13.1 disposée à une extrémité supérieure du boîtier 11, et une deuxième carte électronique 13.2 disposée sous la première carte électronique 13.1 et s'étendant sensiblement parallèlement à l'axe X. La première carte électronique 13.1 est reliée à la deuxième carte électronique 13.2 et comprend des boutons de commande 17 accessibles depuis une face supérieure du boîtier 11 pour sélectionner une vitesse de rotation du moteur 12. La première carte électronique 13.1 est aussi reliée à un écran d'affichage 18 agencé pour afficher une valeur représentative de la vitesse de rotation souhaitée dudit moteur 12 sur la face supérieure du boîtier 11. La deuxième carte électronique 13.2 est relié au cordon d'alimentation 14 et comporte un interrupteur « marche-arrêt » coopérant avec un bouton poussoir 16 reçu dans une ouverture ménagée sur un pourtour supérieur du boîtier 11. Le bouton poussoir 16 est destiné à être pressé par l'utilisateur pour actionner le moteur 12.

Le pied de mixage 20 comprend, de façon connue en soi, un fût 21 tubulaire, un arbre d'entraînement 22 monté à rotation dans le fût 21, et un couteau 23 fixé à une extrémité inférieure de l'arbre d'entraînement.

Le fût 21 s'étend selon l'axe X dans le prolongement du bloc-moteur 10 et comprend une extrémité supérieure emmanchée sur l'extrémité inférieure du boîtier 11, et une extrémité inférieure délimitant une cloche 21a à l'intérieur de laquelle s'étend le couteau 23. La cloche 21a comporte ici trois lobes délimitant une jupe entourant le couteau 23 pour limiter les risques de blessure avec ledit couteau 23 et améliorer l'efficacité du mixage. L'extrémité inférieure du fût 21 est équipée d'un support de palier 24 formant un élément d'obturation de ladite extrémité inférieure du fût 21 et délimitant un fond de la cloche 21a depuis lequel s'étend les lobes protégeant le couteau 23. Le support de palier 24 est reçu de manière étanche dans l'extrémité inférieure du fût 21 et comprend un premier perçage 24a central traversé par l'arbre d'entraînement 22. Le premier perçage 24a s'étend selon l'axe X et a une extrémité inférieure pourvue d'un laminage dans lequel est reçu un joint d'étanchéité 25 ayant une lèvre assurant une étanchéité entre l'arbre d'entraînement 22 et ledit premier perçage 24a pour empêcher tout liquide de pénétrer à l'intérieur du fût 21 et donc à l'intérieur du bloc-moteur 10 lorsque le pied de mixage 20 est immergé dans la préparation alimentaire.

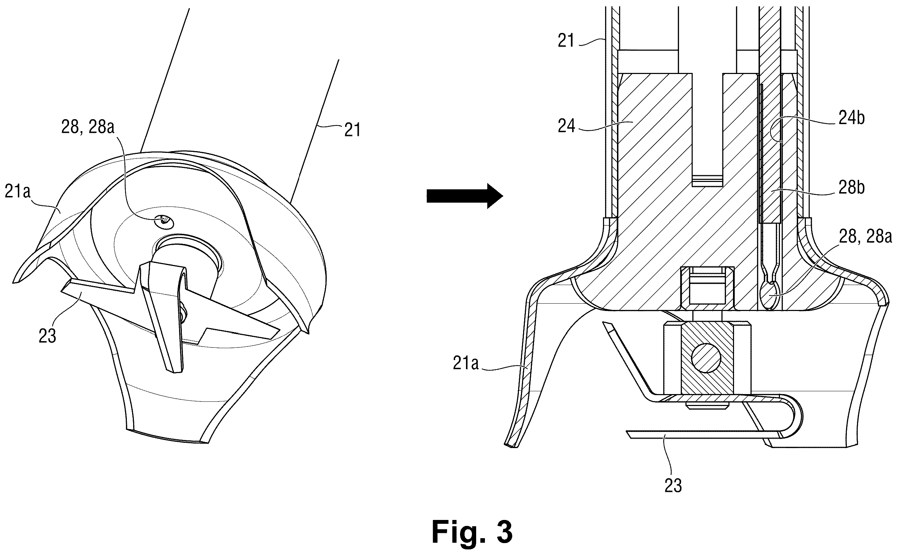

L'arbre d'entraînement 22 a un axe central sensiblement confondu avec l'axe X et est monté à rotation selon ledit axe X dans le premier perçage 24a du support de palier 24 au moyen d'un palier 26 agencé en amont du joint d'étanchéité 25. Une extrémité supérieure de l'arbre d'entraînement 22 est équipée d'une roue dentée 27 coopérant avec les dents de l'entraîneur rotatif 15. La roue dentée 27 est fixe vis-à-vis de l'arbre d'entraînement 22 de sorte qu'une rotation de l'arbre de sortie 12a du moteur 12 selon l'axe X entraîne une rotation de l'arbre d'entraînement 22 et donc du couteau 23 selon dudit axe X. En référence à la figure 3, le pied de mixage 20 comprend en outre un capteur de température 28, ici de type CTN (Coefficient de Température Négatif), ayant un élément sensible 28a, appelé aussi thermistance, reçu dans un deuxième perçage 24b ménagé dans support de palier 24 selon un axe sensiblement parallèle à l'axe X. L'élément sensible a ici une plage de fonctionnement allant de -40 à 125 degrés Celsius. Le deuxième perçage 24b est dit traversant et débouche sur une face inférieure du support de palier 24 et donc dans la cloche 21a. L'élément sensible 28a est agencé légèrement en retrait de la face inférieure du support de palier 24 et est maintenu en position dans le deuxième perçage 24b en étant noyé dans une résine polymère (non représenté) remplissant ledit deuxième perçage 24b. La résine polymère permet de protéger l'élément sensible 28a de l'environnement extérieur tout en permettant audit élément sensible 28a d'être au plus près des ingrédients broyés lorsque la cloche 21a est immergée dans la préparation alimentaire. En outre, la résine polymère utilisée est de qualité alimentaire, autrement dit compatible avec les produits alimentaires. L'élément sensible 28a délivre ainsi un signal représentatif d'une température de la préparation alimentaire et est relié via un câble de liaison 28b à la première carte électronique 13.1 qui est agencée pour afficher une valeur représentative de la température de ladite préparation alimentaire sur l'écran d'affichage 18 du bloc-moteur 10 via le signal délivré par ledit élément sensible 28a.

On notera qu'un tel agencement et une telle intégration du capteur de température 28 dans la cloche 21a permettent un nettoyage facile et sûr du pied de mixage 20 pour éviter toute contamination de la préparation alimentaire.

On notera également que l'unité de commande 13 peut être agencée pour empêcher le fonctionnement du moteur 12 suivant la température de la préparation alimentaire mesurée via le capteur de température 28, et cela quelle que soit la position du bouton poussoir 16. Par exemple, l'unité de commande 13 peut être agencée pour empêcher le fonctionnement du moteur 12 lorsque la température de la préparation alimentaire mesurée via le capteur de température 28 est inférieure à une température minimale prédéterminée ou supérieure à une température maximale prédéterminée. L'unité de commande 13 peut en outre être agencée pour délivrer un signal sonore lorsque la température de la préparation alimentaire mesurée via le capteur de température 28 est inférieure à la température minimale prédéterminée ou supérieure à la température maximale prédéterminée.

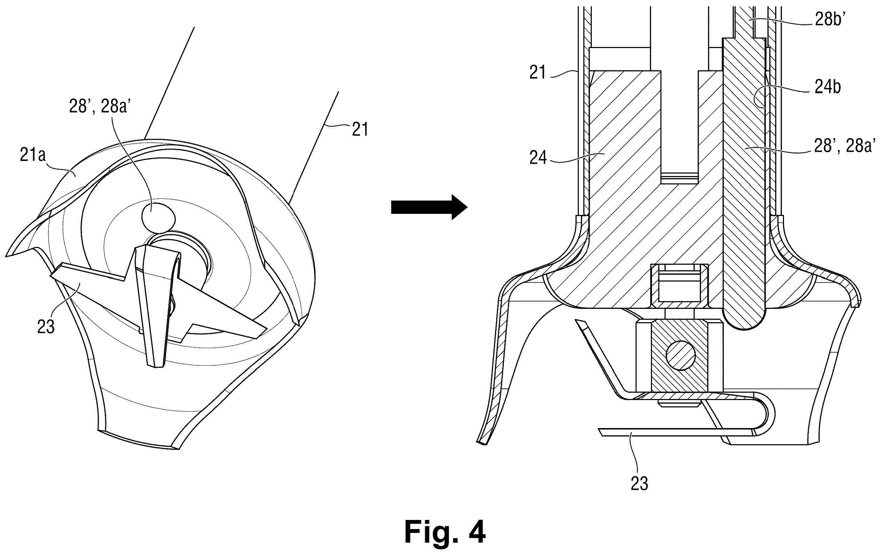

La figure 4 illustre un pied de mixage 20' qui n'est autre qu'une variante du pied de mixage 20. Le pied de mixage 20' diffère du pied de mixage 20 en ce qu'il comprend une sonde de température 28', ici de type CTN, en lieu et place du capteur de température 28 noyé dans la résine polymère de qualité alimentaire. La sonde de température 28' forme un capteur de température ayant élément sensible (non représenté) enveloppé dans une capsule 28a', de forme globalement cylindrique, qui est insérée et maintenue en position dans le deuxième perçage 24b, ici de manière chimique (collage, résinage...) ou mécanique (soudure, vissage...). La capsule, réalisée ici en inox, a une extrémité libre, de forme sensiblement semi-sphérique, s'étendant en saillie de la face inférieure du support de palier 24 et l'élément sensible est relié via un câble de liaison 28b' à la première carte électronique 13.1 du bloc-moteur 10 pour permettre l'affichage d'une valeur représentative de la température de la préparation alimentaire via l'écran d'affichage 18.

Bien entendu, l'invention n'est pas limitée au mode de réalisation décrit mais englobe toute variante entrant dans le champ de l'invention telle que définie par les revendications.

Bien que les capteurs de température 28, 28' soient ici de type CTN, ils peuvent être de nature différente (thermocouple, RTD ou « Resitance Temperature Detector », sonde Pt100, infrarouge...) .

Bien que les capteurs de température 28, 28' soient ici agencée dans le fond de la cloche 21a, ils peuvent aussi être agencés sur un pourtour interne de la cloche 21a en étant par exemple intégrés dans un des lobes de ladite cloche 21a.

Les capteurs de température 28, 28' peuvent être remplacés par tout autre type de capteur permettant de mesurer un paramètre donné de la préparation alimentaire (pH, niveau...). Pour des raisons de sécurité, les capteurs de température 28, 28' peuvent par exemple être remplacés par un capteur de détection d'immersion relié à l'unité de commande 13 de manière à empêcher le fonctionnement du moteur 12 lorsque la cloche 21a n'est pas immergée dans la préparation alimentaire, et donc d'éviter toute fausses manipulations ou mauvaises utilisations du mixeur plongeant 1 pouvant provoquer des blessures à l'utilisateur.

Bien que le pied de mixage 20 ne comprenne ici qu'un capteur, il peut aussi en comprendre plusieurs. Le pied de mixage peut par exemple combiner le capteur de température 28, 28' avec le capteur de détection d'immersion.

Bien que le bloc-moteur 10 comprenne ici un cordon d'alimentation 14 pour relier le moteur 12 à une source d'alimentation, le bloc moteur 10 peut aussi comprendre une batterie interne pour former un mixeur plongeant sans fil.

La plage de fonctionnement des capteurs de température 28, 28' peut être différente de celle décrite. Elle peut notamment avoir une température minimum inférieure ou supérieure à -40 degrés Celsius, et/ou une température maximum inférieure ou supérieure à 125 degrés Celsius. Ladite plage de fonctionnement peut ainsi être plus large ou moins large que celle décrite.

## Revendications

1. Pied de mixage (20) pour mixeur plongeant (1) destiné à être immergé dans une préparation alimentaire, le pied de mixage comprenant :
- un fût (21) tubulaire ayant une extrémité délimitant une cloche (21a) ;
- un élément d'obturation (24) de l'extrémité du fût, l'élément d'obturation délimitant un fond de la cloche ;
- un arbre de transmission (22) qui s'étend selon un axe longitudinal du fût et qui est monté à rotation suivant ledit axe longitudinal dans un premier perçage central ménagé dans l'élément d'obturation ; et
- un couteau (23) reçu à l'intérieur de la cloche et fixé à une extrémité de l'arbre de transmission,
**caractérisé en ce que** le pied de mixage comprend en outre au moins un capteur (28, 28') de mesure d'un paramètre de la préparation alimentaire, le capteur s'étendant dans le fond de la cloche pour délivrer un signal représentatif du paramètre de ladite préparation alimentaire.

2. Pied de mixage (20) selon la revendication 1, dans lequel le capteur (28, 28') s'étendant dans un deuxième perçage ménagé dans l'élément d'obturation (24) parallèlement au premier perçage.

3. Pied de mixage (20) selon la revendication 2, dans lequel le capteur (28) comprend un élément sensible maintenu en position dans le deuxième perçage via une résine polymère.

4. Pied de mixage (20) selon la revendication 2, dans lequel le capteur (28') est sous forme d'une sonde insérée dans le deuxième perçage.

5. Pied de mixage (20) selon l'une quelconque des revendications précédentes, dans lequel le capteur (28, 28') est un capteur de température agencé pour mesurer la température de la préparation alimentaire.

6. Pied de mixage (20) selon l'une quelconque des revendications précédentes, dans lequel le capteur est un capteur de détection d'immersion de la cloche dans la préparation alimentaire.

7. Mixeur plongeant (1) comprenant un bloc-moteur (10) sur lequel est rapporté un pied de mixage (20) selon l'une quelconque des revendications précédentes, le bloc-moteur comportant un moteur (12) électrique agencé pour entraîner en rotation l'arbre de transmission (22) et une unité de commande (13) du moteur, le capteur (28, 28') étant relié à l'unité de commande.

8. Mixeur plongeant (1) selon la revendication 7, dans lequel le bloc-moteur (10) comprend un écran d'affichage (18) relié à l'unité de commande (13) pour afficher une valeur représentative du paramètre de la préparation alimentaire via le signal délivré par le capteur (28, 28').

9. Mixeur plongeant (1) selon la revendication 7 ou 8, dans lequel l'unité de commande (13) est agencée pour empêcher le fonctionnement du moteur (12) en fonction du signal délivré par le capteur.
